Europäisches Patentamt

(19) European Patent Office    (11) Numéro de publication : **0 001 724**

Office européen des brevets    **B1**

(12)    **FASCICULE DE BREVET EUROPÉEN**

(45) Date de publication du fascicule du brevet :    (51) Int. Cl.³ : **C 08 G 63/76**
08.02.84

(21) Numéro de dépôt : **78400091.1**

(22) Date de dépôt : **06.09.78**

(54) Procédé de préparation de polyesters insaturés réticulés.

(30) Priorité : 28.09.77 FR 7729123

(43) Date de publication de la demande :
02.05.79 Bulletin 79/09

(45) Mention de la délivrance du brevet :
08.02.84 Bulletin 84/06

(84) Etats contractants désignés :
**BE CH DE GB LU NL SE**

(56) Documents cités :
**FR-A- 1 154 845**
**FR-A- 1 468 237**
**GB-A- 1 110 324**
**US-A- 4 016 112**
Le dossier contient des informations techniques présentées postérieurement au dépôt de la demande et ne figurant pas dans le présent fascicule.

(73) Titulaire : **Michel, Pierre-Joseph**
**Villa Célia 5 allée Saint-Exupéry**
**F-64600 Anglet (FR)**
**Anciaux, Martine veuve Vastesaeger**
**Villa Célia 5 allée Saint-Exupéry**
**F-64600 Anglet (FR)**

(72) Inventeur : **Michel, Pierre**
**Villa Célia 5 allée Saint-Exupéry**
**F-64600 Anglet (FR)**

(74) Mandataire : **Bloch, Robert**
**39 avenue de Friedland**
**F-75008 Paris (FR)**

# 0 001 724

## Procédé de préparation de polyesters insaturés réticulés

La présente invention concerne un procédé de préparation de polyesters insaturés réticulés et l'application de ce procédé à la production de matières ayant des caractéristiques mécaniques élevées et une excellente résistance au feu.

On sait qu'on peut faire réticuler des polyester insaturés linéaires en les mettant en contact avec des agents réticulants, par exemple des monomères vinyliques comme le styrène, le méthacrylate de méthyle, le vinyl-toluène, le cyanurate de triallyle, le phtalate de diallyle, ou des diisocyanates (lorsque les polyesters possèdent encore des groupements OH libres). Le plus souvent, dans la pratique, le polyester linéaire est vendu sous la forme d'une solution dans l'agent réticulant, et on ajoute des initiateurs et accélérateurs de polymérisation pour déclencher puis entretenir la réticulation qui se traduit par une prise en gel du milieu liquide de départ.

Toutefois, la réticulation ne se déroule à une vitesse rapide, en un temps compris entre quelques secondes et quelques minutes, que si la réaction se produit à température élevée, ce qui présente de nombreux inconvénients dans, la pratique industrielle.

L'invention vise à permettre une très forte accélération de la réticulation dans les conditions normales de température et de pression pour le polymaléate-phtalate d'éthylèneglycol à indice OH de 30-250.

On a proposé dans le brevet US 4 016 116 de préparer des produits alvéolaires à partir de résines polyesters insaturés par réaction de carbonates ou bicarbonates métalliques avec des phosphates ou des phosphites. Mais ces composés exigent, d'une part, l'emploi d'un accélérateur, d'autre part, un réchauffage à une température au moins égale à 80 °C. Dans la plupart des exemples de ce brevet, la température indiquée est comprise entre 120 et 160 °C.

La présente invention se distingue nettement de ce brevet en ce qu'elle prévoit l'utilisation comme dérivé hydrolysable choisi parmi le chlorure de phosphore, l'oxychlorure de phosphore ou le chlorure de silicium qui présentent la propriété inattendue de s'hydrolyser de façon totale avec un fort dégagement de chaleur.

L'invention a donc pour objet un procédé de préparation de polyesters insaturés réticulés à partir d'une solution de polymaléate-phtalate d'éthylèneglycol linéaire ayant un indice OH entre 30 et 250 dans un agent réticulant du type dans lequel on met en contact un milieu de réaction comprenant ladite solution et un initiateur de polymérisation et contenant des radicaux hydroxyle libres avec au moins un dérivé hydrolysable en proportion comprise entre 0,1 et 10 % en poids, rapportée à ladite solution, caractérisé par le fait qu'on opère à la température ambiante et à la pression atmosphérique et que le dérivé hydrolysable est choisi dans le groupe comprenant le chlorure de phosphore, l'oxychlorure de phosphore et le chlorure de silicium.

L'hydrolyse du dérivé chloré par les radicaux OH présents dans le milieu est une réaction fortement exothermique et la chaleur dégagée élève la température du milieu de réaction et provoque ainsi une forte accélération de la réticulation.

Les radicaux OH présents dans le milieu réactionnel peuvent avoir différentes origines. Ils peuvent provenir du polymaléate-phtalate d'éthylèneglycol insaturé lui-même, estérifié de façon incomplète, de l'eau présente, sous forme adsorbée, dans des charges inertes introduites dans le milieu réactionnel, ou de l'eau présente sous forme libre, ajoutée au milieu réactionnel. L'accélération de la prise en gel des polyesters insaturés procurée par l'invention élargit considérablement les possibilités d'emploi de ces polyesters.

La longueur de chaîne desdits polyesters de départ peut varier. On choisira des polyesters à chaînes courtes si l'on désire des produits finaux rigides, et des polyesters à chaînes longues si l'on veut des produits plus souples.

Ces polyesters réticulent par ouverture de leurs doubles liaisons et formation de liaisons de pontage sous l'action d'agents réticulants tels que les monomères vinyliques, notamment styrène, vinyltoluène, méthacrylate de méthyle, phtalate de diallyle, cyanurate de triallyle, ou les diisocyanates, lorsque les polyesters contiennent encore des groupements OH.

En pratique, les polyesters envisagés sont vendus sous la forme de solution dans l'agent réticulant, le mélange contenant en outre des inhibiteurs de polymérisation tels que des dérivés quinoniques.

La proportion de l'agent réticulant dans ces mélanges est généralement de 20 à 30 % en poids. De tels mélanges sont notamment vendus sous la marque SYNOLITE par la Société Synres, Pays-Bas.

Pour provoquer la polymérisation, qui se traduit par une prise en gel du mélange de départ liquide, on ajoute à celui-ci des initiateurs de polymérisation, notamment des peroxydes organiques (peroxyde de benzoyle, de méthyléthylcérone) et des accélérateurs tels que la paratoluidine ou l'octoate de cobalt.

Pour tester l'action des dérivés chlorés sur la vitesse de réticulation des polymaléates-phtalate d'éthylèneglycol insaturés à indice OH = 30-250, on mesure la durée de prise en gel à 20 °C d'un mélange polymérisable contenant de la SYNOLITE FTP 1140 (marque d'un produit à base de polymaléate-phtalate d'éthylèneglycol et de méthacrylate de méthyle, vendu par la société Synres), du peroxyde de méthyléthylcétone comme initiateur de polymérisation et de l'octoate de cobalt à 5 % comme accélérateur ainsi que du trichlorure de phosphore $PCl_3$, puis la durée de prise en gel du même mélange sans $PCl_3$.

On effectue deux essais chaque fois avec des proportions différentes d'initiateur et d'accélérateur. Les résultats figurent dans le tableau ci-après.

| Substances | Parties (en poids) | | | |
|---|---|---|---|---|
| | Essai n° 1 (témoin) | Essai n° 2 (invention) | Essai n° 3 (témoin) | Essai n° 4 (invention) |
| Synolite FTP 1140 | 100 | 100 | 100 | 100 |
| Peroxyde de méthyléthylcérone | 1 | 0,6 | 0,8 | 0,8 |
| Octoate de cobalt à 5 % | 0,5 | — | 0,03 | 0,03 |
| Trichlorure de phosphore | — | 0,2 | — | 0,17 |
| Durée de prise en gel | 15 mn | 4 mn | 12 h | 20 mn |

Dans la première série d'essais (n° 1 et 2), on constate que la durée de prise en gel passe de 15 à 4 mn lorsqu'on ajoute du PCl$_3$, bien qu'on n'utilise alors plus d'accélérateur.

Dans la deuxième série (n° 3 et 4), on a réduit la quantité d'accélérateur, qui passe à 0,03 %. La durée de prise en gel, de ce fait, passe à 12 heures en l'absence de PCl$_3$, mais n'est que de 20 mn si l'on ajoute PCl$_3$.

## Revendication

Procédé de préparation de polyesters insaturés réticulés à partir d'une solution de polymaléatephtalate d'éthylèneglycol linéaire, ayant un indice OH entre 30 et 250 dans un agent réticulant du type dans lequel on met en contact un milieu de réaction comprenant ladite solution et un initiateur de polymérisation et contenant des radicaux hydroxyle libres avec au moins un dérivé hydrolysable en proportion comprise entre 0,1 et 10 % en poids, rapportée à ladite solution, caractérisé par le fait qu'on opère à la température ambiante et à la pression atmosphérique et que le dérivé hydrolysable est choisi parmi le chlorure de phosphore, l'oxychlorure de phosphore et le chlorure de silicium.

## Claim

Method of producing cross-linked unsaturated polyesters from a solution of linear ethylene glycol polymaleatephtalate having an OH value of between 30 and 250 in a cross-linking agent, of the type in which a reaction medium comprising said solution and a polymerisation initiator and containing free hydroxyl radicals is brought into contact with at least one hydrolyzable derivative in an amount from 0.1 to 10 % by weight, based on said solution, characterized in that the reaction is carried out at room temperature and under atmospheric prressure and that the hydrolyzable derivative is selected among the phosphorous chloride, phosphorous oxychloride, and silicon chloride.

## Anspruch

Verfahren zur Herstellung von ungesättigten vernetzten Polyestern aus einer Lösung von Polymaleat-Phthalat von linearem Äthylenglycol mit einer OH-Zahl zwischen 30 und 250 in einem Vernetzungmittel der Art, bei welcher man ein Reaktionsmedium, das die genannte Lösung sowie einen Polymerisationskatalysator aufweist und freie Hydroxylradikale mit wenigstens einem hydrolysierbaren Derivat in einer zwischen 0,1 und 10 Gewichtsprozenten, bezogen auf die genannte Lösung, liegenden Menge, enthält, dadurch gekennzeichnet, daß bei Raumtemperatur sowie atmosphärischem Druck gearbeitet wird und daß das hydrolysierbare Derivat unter Phosphorchlorid, Phosphoroxychlorid und Siliziumchlorid ausgewählt ist.